Europäisches Patentamt

European Patent Office

Office européen des brevets

(11) Publication number: **0 269 125 B1**

# EUROPEAN PATENT SPECIFICATION

(45) Date of publication of patent specification: **12.08.92**

(51) Int. Cl.⁵: **F02B 29/08**, F02D 13/02, F02D 23/00

(21) Application number: **87117608.7**

(22) Date of filing: **27.11.87**

(54) **Supercharged engine.**

(30) Priority: **27.11.86 JP 282624/86**
**27.11.86 JP 282625/86**
**09.02.87 JP 27947/87**

(43) Date of publication of application:
**01.06.88 Bulletin 88/22**

(45) Publication of the grant of the patent:
**12.08.92 Bulletin 92/33**

(84) Designated Contracting States:
**DE FR GB**

(56) References cited:
**EP-A- 0 075 502**
**DE-A- 2 456 752**
**DE-A- 2 901 186**

**MTZ 45 (1984) pages 283 - 288, and 525 - 532**

**Bosch Automotive Handbook, (1986) Pages 298 - 301, 648, 651, 664 & 675**

(73) Proprietor: **Mazda Motor Corporation**
**No. 3-1, Shinchi Fuchu-cho**
**Aki-gun Hiroshima-ken(JP)**

(72) Inventor: **Hitomi, Mitsuo**
**51-7, Kurakake 2-chome, Asakta-ku**
**Hiroshima-shi Hiroshima-ken(JP)**
Inventor: **Sasaki, Junso**
**3-7, Funakoshi 2-chome, Aki-ku**
**Hiroshima-shi Hiroshima-ken(JP)**
Inventor: **Takai, Akira**
**15-2, Yano-Higashi 7-chome, Aki-ku**
**Hiroshima-shi Hiroshima-ken(JP)**
Inventor: **Umezono, Kazuaki**
**4-2, Aosaki-Minami Fuchu-cho**
**Aki-gun Hiroshima-ken(JP)**
Inventor: **Hinatase, Fumio**
**12582-112, Kumano-cho Aki-gun**
**Hiroshima-ken(JP)**

(74) Representative: **Klunker . Schmitt-Nilson .**
**Hirsch**
**Winzererstrasse 106**
**W-8000 München 40(DE)**

## Description

The present invention relates to a supercharged engine having a supercharger and an ignition plug wherein a geometric compression ratio is set to more than 8.5.

A variety of engines are known in the prior art in which a supercharger is employed for supercharging intake air to increase an intake air charge density of engine as disclosed in, for example, Laid-Open Japanese Utility Model Application No. 56-171630 and Laid-Open Japanese Patent Application No. 61-19933. Types of superchargers which are known are a turbo supercharger driven by exhaust gases, a mechanical supercharger driven by an engine output shaft, etc..

In the engine having a supercharger, the exhaust temperature tends to excessively rise at the time of high supercharge particularly during a high-speed, high-load operation. In order to restrain such an excessive temperature rise and to maintain the reliability of the exhaust system, engines in conventional use are designed to lower exhaust temperature with an evaporative latent heat by enriching an air-fuel ratio during a high-speed, high-load operation. However, if the air-fuel ratio is enriched as such, a larger quantity of fuel than required for engine power output is supplied, thus resulting in increased fuel consumption.

In the meantime, the aforementioned lowered fuel economy might be compensated for by raising the cycle efficiency of engine. To realize this, the setting of a high geometric compression ratio is required. Conventional supercharged engines, however, have such a drawback that if this compression ratio is increased, knocks are easy to occur within the high supercharge region; therefore, the geometric compression ratio has been set at a relatively low value of 8.5 or less, but there also exist engines having a compression ratio of more than 8.5 and some form of supercharging system. (According to Bosch Automotive Handbook, pgs. 648-677, e.g. Volvo 760 62E Turbo, Renault Alpine V6 Turbo or Audi 200 Turbo are of the above type of system.)

DE-A-24 56 752 discloses a mechanism for changing the valve timing. An overlap angle between IO and EC having a certain value is obtained which can be broadened to a certain extent.

MTZ 45 Motortechnische Zeitschrift (1984) 7/8 discloses a BMW motorcycle engine having a compression ratio of 10.5:1 wherein an overlap angle between IO and EC is 8°, measured at 2mm valve clearance.

MTZ 45 (1984) 12 disclosed a turbocharged Diesel engine. Since in a Diesel engine fuel is injected directly into a cylinder after air is compressed, the engine is free from knocking. This is why the Diesel engine can adopt a very high compression ratio. Therefore, specific features of a Diesel engine mentioned in the latter document can hardly be useful in regard of the problem of suppressing the knocking phenomenon.

The present invention has been accomplished in an attempt to effectively solve the problems mentioned above, and it is therefore an object of the invention to realize an improvement in fuel economy as well as a lowering of exhaust temperature of a supercharged engine in high-speed, high-load operation.

According to the present invention, a geometric compression ratio of engine is set at more than 8.5 while engine performance specifications are set such that the relationship between an intake port closing timing Y expressed by a crank angle after bottom dead center (BDC) and an overlap angle X expressed by a crank angle for a period during which both of an intake valve and an exhaust valve are open, will become

$$Y \geq -1.75X + 10.$$

The term "geometric compression ratio" used herein shall mean a ratio of a cylinder capacity when a piston is at BDC, to a clearance volume, while a ratio of a cylinder capacity measured at the time the intake valve is closed, to the clearance volume shall be referred to as an "effective compression ratio".

In a supercharged engine of the aforesaid constitution, the geometric compression ratio is larger than that of conventional supercharged engines. Since the aforementioned intake port closing timing, however, is delayed more than that in conventional supercharged engines provided that the overlap angle is maintained in the conventional level, an effective compression ratio is low despite of the high geometric compression ratio whereby combustion stability is ensured even during high-speed, high-load operation in which much supercharged mixture is fed in. Furthermore, as an expansion ratio increases with the increase of the geometric compression ratio, not only the exhaust gas temperature is lowered but also a cycle efficiency is enhanced within the high supercharge region. At high geometric compression ratios, an exhaust gas scavenging efficiency lowers when the overlap angle decreases, resulting in the rise of intake gas temperature which tends to cause knocks. The poor scavenging efficiency also lowers the charging efficiency, accompanying a sudden decrease of a mean effective pressure. In the present invention, however, the overlap angle and the intake port closing timing are set to the aforementioned relationship; therefore, when one of the former and the latter is fixed, the other will be in excess of a specific amount, thereby obtaining a necessary scavenging efficiency, decreasing the effective compression ratio, and lowering exhaust temperatures through the increase of expansion ratio. Thus, the aforesaid knocking tendency can be eliminated while improving the cycle efficiency of engine.

Other features and advantages of the present invention will become apparent from the following description of preferred embodiments thereof when taken with the accompanying drawings.

## BRIEF DESCRIPTION OF THE DRAWINGS

The present invention will become more fully understood from the detailed description given hereinbelow and the accompanying drawings which are given by way of illustration only, and thus are not limitative of the present invention and wherein:

Fig. 1 is a schematic block diagram of a supercharged engine in accordance with a first embodiment of the invention;

Fig. 2 is a characteristic curve diagram showing a valve lift of intake and exhaust valves;

Fig. 3 is a graph showing a mean effective pressure plotted in a correlation of an intake valve closing timing with an overlap angle;

Fig. 4 is a graph showing a desirable range of the intake port closing timing in a correlation of an effective compression ratio with a geometric compression ratio;

Fig. 5 is a graph showing a desirable range of the intake port closing timing in a correlation with the geometric compression ratio;

Figs. 6(a) through (c) are graphs showing comparative test results of fuel consumption rate, intake pressure and exhaust gas temperature, respectively, between the engine of the present invention and conventional engines;

Fig. 7 is a graph showing operational conditions of a secondary throttle valve;

Fig. 8 is a characteristic diagram showing a relationship between the movement of valves and gas pressures of engine in a light-load range;

Fig. 9 is a schematic block diagram of a supercharged engine in accordance with a second embodiment of the invention;

Fig. 10 is a characteristic curve diagram showing the movement of intake and exhaust valves;

Fig. 11 is a graph showing engine conditions in connection with which a shutter valve is controlled;

Fig. 12 is a flow chart for controlling the shutter valve;

Fig. 13 is a time chart showing the control operation of the shutter valve during acceleration; and

Fig. 14 is a graph showing another example of control of the shutter valve.

## DESCRIPTION OF THE PREFERRED EMBODIMENTS

Two preferred embodiments of the present invention will now be described by referring to the accompanying drawing.

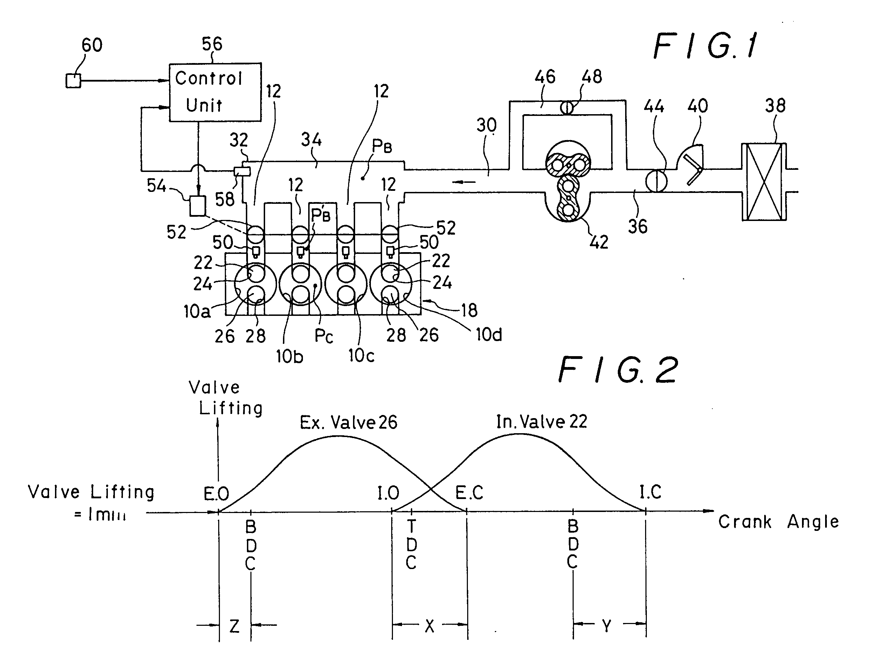

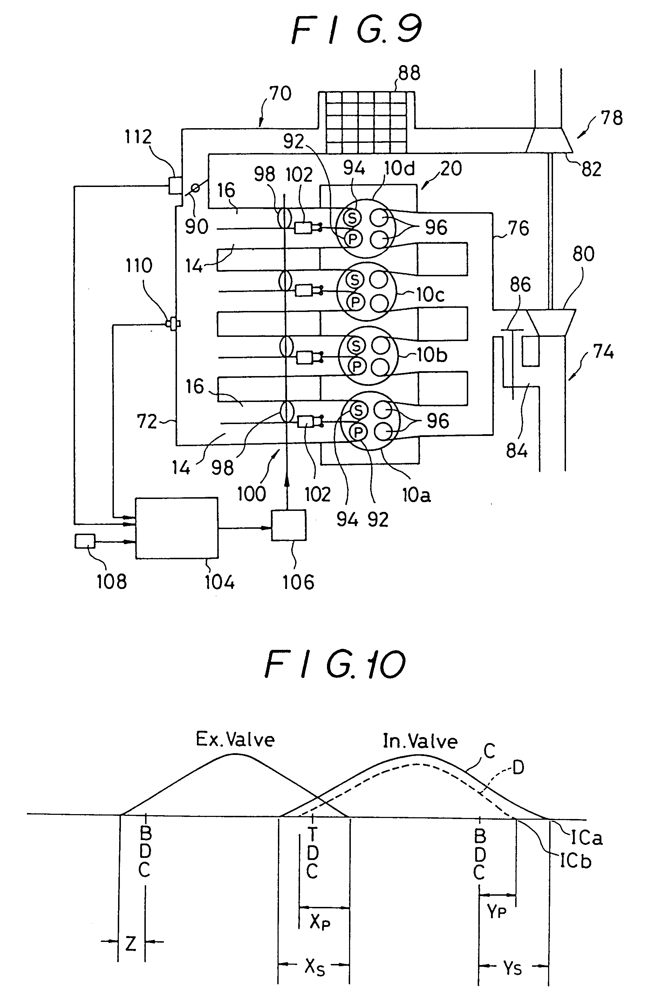

A first embodiment, as shown in Fig. 1, relates to an engine 18 having one independent intake air passage 12 for each of cylinders 10a through 10d, while a second embodiment, as shown in Fig. 9, relates to an engine 20 having two independent intake air passages 14 and 16 for each of cylinders 10a through 10d.

First Embodiment:

Fig. 1 shows the general constitution of a first embodiment of the present invention, in which numeral 18 is a fuel injection-type 4-inline engine having first to fourth cylinders 10a through 10d. Each of the cylinders 10a through 10d is provided with an intake port 24 which is opened and closed by an intake valve 22 and an exhaust port 28 which is opened and closed by an exhaust valve 26. In the engine 18 of the present invention, a geometric compression ratio is set to a high compression ratio, i.e. more than 8.5.

In each of the intake and exhaust valves 22 and 26, their opening periods are overlapped with each other, the "opening" being defined here by the valve lift of 1 mm. The overlapping period, during which both valves are open, can be expressed by a crank angle which will be referred to as an overlap angle X. In the embodiment, this overlap angle X is widely set around the top dead center (TDC) as shown in Fig. 2.

Also, the intake port 24 is now defined as "closed" when the intake valve 22 reaches the position of 1 mm lift, and the crank angle after bottom dead center (BDC) is used to express the intake port closing timing Y. In the embodiment, this timing Y is set to a retarded point after BDC as shown in Fig. 2.

Additionally, if the crank angle before BDC, with the exhaust valve 26 opened to the lift of 1 mm, is used to define the exhaust port opening timing Z, this timing Z is set relatively close to BDC as shown in Fig. 2.

Supposing the crank angle at a full stroke of piston is S (= 180 degrees), adiabatic compression takes place during (S-Y) and adiabatic expansion occurs during (S-Z). The exhaust gas temperature can be lowered simply by extending the adiabatic expansion stroke longer than the adiabatic compression stroke to thereby cool down combustion gases by the adiabatic expansion thereof. Therefore, the relation of (S-Y) < (S-Z), namely Y > Z, is effective to lower the exhaust temperature. Since cylinder scavenging by intake gases can effectively be done when an overlap angle X is large, the overlap angle X is required to be set over a specific value in order to improve the scavenging efficiency at the time of high supercharge.

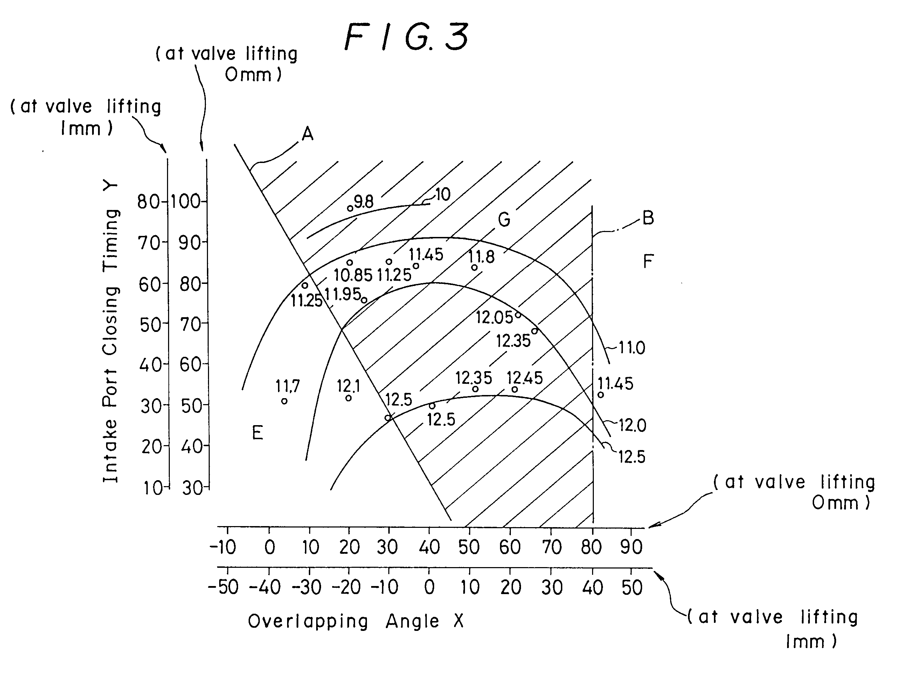

Next, the correlation of the intake port closing timing Y to the overlap angle X will be described by referring to Fig. 3. In this drawing, the intake port closing timing Y is plotted on the vertical axis and the overlap angle X on the horizontal axis; also plotted is mean effective pressures Pe (kg/cm$^2$) obtained by experiments at the limitation of knocking, that is, maximum Pe without causing knocking at the speed of 1500 rpm which is a typical engine speed in the normal operation. The geometric compression ratio was set to 9.4 in the above experiments, but similar results were observed at other compression ratios over 8.5.

As is clear from Fig. 3, where the intake port closing timing Y is fixed at a specific value (in other words, when the effective compression ratio is fixed), there can be observed a region E where the mean effective pressure Pe decreases excessively with a decrease in the overlap angle X. Since in this region E severe knocking takes place, X and Y should be set, when determining engine specifications, so as to avoid this region E. When, in Fig. 3, points where the mean effective pressures Pe suddenly decrease are connected by a line A, this line A will become nearly straight and can be expressed by a formula

$$Y = -1.75X + 10.$$

Therefore, knocking can be prevented, while avoiding the region E, by setting X and Y such that the following formula will be satisfied:

$$Y \geq -1.75X + 10 \qquad (1)$$

In Fig. 3, a line B denotes a boundary of a region F where much blowby takes place due to an excessive overlap angle X (X = 40° or more). Consequently, in determining engine specifications, a region G defined between the regions E and F can delay the intake port closing timing Y and, at the same time, increase the overlap angle X while preventing the knocking and blowby.

In case X and Y are to be defined with the valve lift set at 0 mm, the aforesaid formula (1) can be expressed as Y ≥ -1.75X + 100.

If one of the factors of Fig. 3 is numerically fixed when concretely deducing the engine specifications, the numerical range of other factors will be established of themselves, thus enabling to efficiently set the engine specifications.

The intake port 24 of each of the aforesaid cylinders 10a through 10d is connected to an intake passage generally indicated by numeral 30. This intake passage 30 comprises the independent passages 12 communicating at their downstream ends with the intake ports 24 of the cylinders 10a through 10d, a manifold 34 formed within a surge tank 32 and connected to the upstream ends of the independent passages 12, and a common passage 36 connected to the upstream end of the manifold 34, the upstream end of the common passage 36 being connected to an air cleaner 38.

In the aforesaid common passage 36, an air flow meter 40 for detecting the flow rate of intake air, a Roots-supercharger as a mechanical supercharger driven directly by the engine 18 to supercharge the intake air, and a throttle valve 44 for regulating the flow rate of intake air are disposed in this order from the upstream side, i.e. from the side of air cleaner 38. The common passage 36 is provided with a bypass passage 46 which connects the portions immediately upstream and downstream of the supercharger 42 with each other; and on the way of the bypass passage 46 is disposed a bypass valve 48 which opens and closes the passage 46.

A fuel injector 50 is arranged in each independent passage 12 communicating with the intake port 24 for supplying by injection the fuel into each of the cylinders 10a through 10d. At the immediately upstream side of each fuel injector 50 is disposed a secondary throttle valve 52 comprising a butterfly valve which opens and closes the independent passage 12. These secondary throttle valves 52 are connected to a common actuator 54 and are opened and closed simultaneously by the operation of this actuator 54.

The actuator 54 for operating the secondary throttle valves 52 is controlled by a control unit 56. An intake pressure sensor 58 and an exhaust pressure sensor 60 are provided to send signals to the control unit 56, and the control unit 56 controls the actuator 54 to open the secondary throttle valves 52 during high-load operation of the engine 18 at which the intake pressure in the intake air passage 30 increases in excess of the exhaust pressure in the exhaust passage (not illustrated), and to close the valves 52 in other cases, for example during light-load operation (idling) of the engine 18. Another sensing means may be adopted, in place of the intake pressure sensor 58 and exhaust pressure sensor 60, for indirect sensing from an operating state, of a region where the intake pressure is to exceed the exhaust pressure.

It is, however, to be noted here that the secondary throttle valves 52 need not be always closed when the intake air pressure decreases below the exhaust gas pressure. For example, these valves 52 may be controlled to close only when the engine 18 is operated at low-speed, low-load condition, for the purpose of increasing exhaust gas recirculation.

Description of Delayed Intake Port Closing Timing:

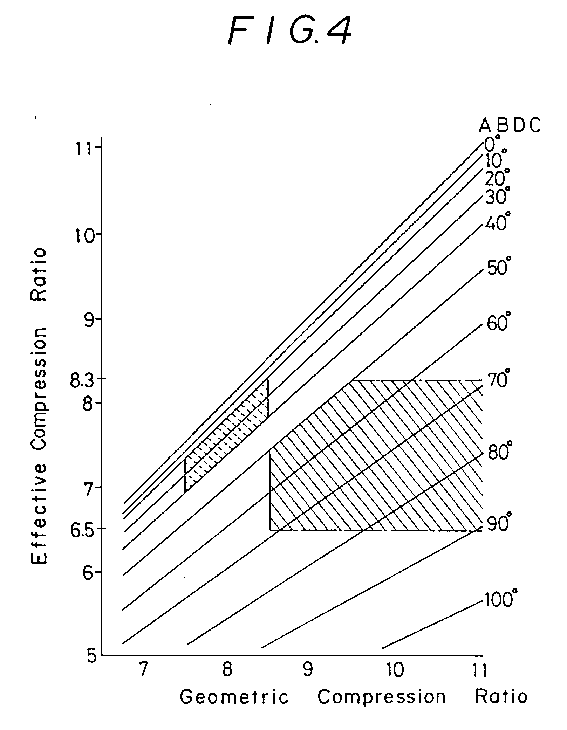

In engines with supercharger described above, while the geometric compression ratio is set higher than that in conventional supercharged engines, the effective compression ratio is lowered moderately by the delay of the intake port closing timing. This relation, when compared with conventional ones, is shown in Fig. 4.

That is, Fig. 4 shows a desirable region of the geometric compression ratio plotted on the horizontal axis, the effective compression ratio plotted on the vertical axis, and the intake port closing timing used as a parameter, with the overlap angle X fixed to -23° which is typical in the conventional engines. In this drawing, the range indicated by oblique broken lines corresponds to the specifications in conventional engines with supercharger, while the range indicated by oblique solid lines is a preferred range in the invention in which an effective compression ratio is moderately set by the geometric compression ratio and intake port closing timing.

In the conventional engines with supercharger, as shown in this drawing, the geometric compression ratio is set at 7.5 to 8.5 and the intake port closing timing, at around 20 to 40 degrees after BDC (ABDC). Within this range, a moderate effective compression ratio is obtained to prevent knocking and to insure combustion stability during high supercharge.

In the meantime, in the engine of the present invention, the geometric compression ratio is set higher than that of engines in conventional use, i.e. more than 8.5, but the intake port closing timing is set over 50 degrees ABDC, which is more delayed than conventional timing, thereby enabling to maintain the effective compression ratio to, for example, the same level as conventional ones.

Alternatively, increased geometric compression ratio reduces a clearance volume, diminishing residual gases and accordingly enhancing combustion stability. The effective compression ratio, therefore, can be set lower than conventional ones.

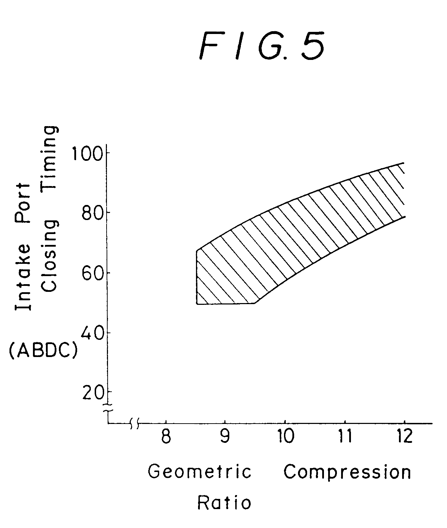

It is desirable that the effective compression ratio be held within a specific range as shown in Fig. 4. When the geometric compression ratio and the intake port closing timing are to be set, it is possible to keep the effective compression ratio within the specific range by delaying the intake port closing timing as the geometric compression ratio increases so that the relation of both can be brought into the range indicated by oblique solid lines in Fig. 5.

By thus moderately decreasing the effective compression ratio, knocking can be prevented. Also, by setting the geometric compression ratio to a large value the expansion ratio increases which enhances the cycle efficiency and accordingly improves fuel consumption. In addition, to increase the expansion ratio as compared with the effective compression ratio enables to lower the exhaust gas temperature at the time of expansion. Therefore, even at a high-speed and high-load engine condition, the reliability of the exhaust system can be maintained by restraining the rise of exhaust temperature without enriching the air-fuel rate as in conventional cases.

During medium- and low-load operation, fuel consumption can be improved also by diminishing a pumping loss. Specifically, since in such a region the air-fuel mixture excessively drawn in is brought back into the intake system while the intake port is open after BDC with the throttle valve 8 so pre-adjusted as to reduce the intake negative pressure more than conventional ones, a pumping loss caused by the intake negative pressure can be reduced.

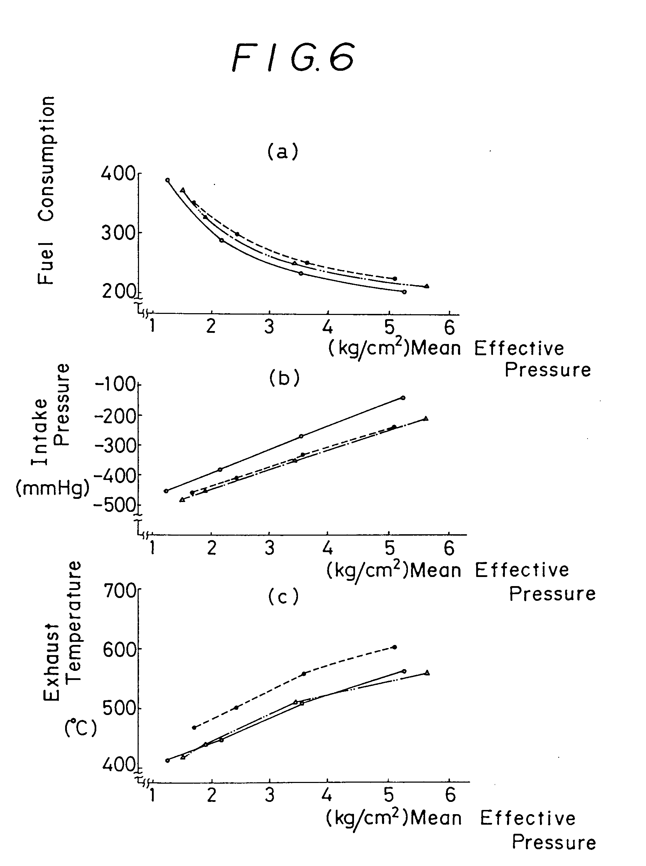

These effects can sufficiently be obtained by delaying the intake port closing timing over 50 degrees ABDC, as will be apparent from Figs. 6(a) through (c) showing experimental results.

Figs. 6(a) through (c) show test datas concerning fuel consumption, intake negative pressure, and exhaust gas temperature, respectively, under various mean effective pressures in supercharged engine of the present invention, conventional supercharged engine, and nonsupercharged (natural aspirated) engine. In each of these graphs, the solid-line curve indicates the datas of the engine of the invention having the geometric compression ratio of 9.4 and the intake port closing timing of around 60 degrees ABDC; the broken-line curve indicates the datas of the conventional supercharged engine having the geometric compression ratio of 7.9 and the intake port closing timing of around 30 degrees ABDC; and the dash and dotted line curve indicates the datas of nonsupercharged engine having the geometric compression ratio of 9.4 and the intake port closing timing of around 30 degrees ABDC. Engine speed was set to 1500 rpm and the air-fuel ratio was λ = 1.

From these test datas it is understood that, in the supercharged engine of the present invention, the fuel consumption is improved and the intake negative pressure becomes smaller as compared with any of the conventional supercharged engine and nonsupercharged, high-compression ratio engine, and accordingly the pumping loss can be reduced. Similar results was also seen in other engine speed ranges. Further, the exhaust gas temperature was observed to be lower than inconventional supercharged engine. This means that the engine of the present invention enables to set the air-fuel rate leaner than the conventional supercharged engines while restraining the excessive rise of exhaust temperature during high-speed, high-load operation.

Description of Increased Overlap Angle:

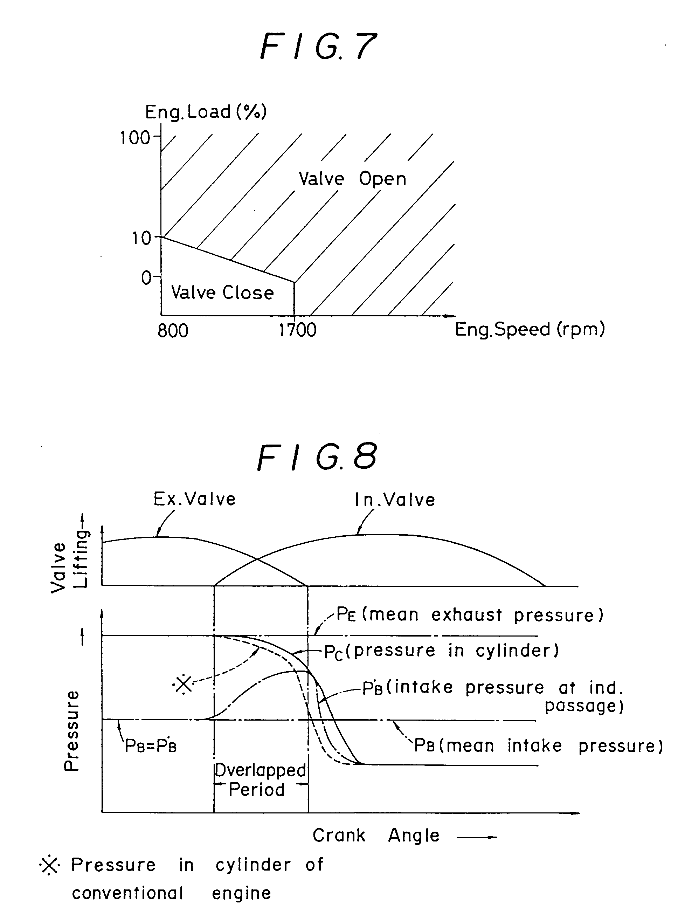

In the first embodiment described above, when the intake air pressure in the passage 30 decreases below the exhaust gas pressure in the exhaust passage because of the throttling of the passage 30 by the throttle valve 44 during the light-load operation of the engine 18, exhaust gases in the exhaust passage recirculates into the cylinders 10a through 10d by virtue of a difference between the aforesaid intake air pressure and the exhaust pressure during the overlapped opening period of the intake and exhaust valves 22, 26 as shown in Fig. 8. This recirculation of the exhaust gases causes residual exhaust gases in the cylinders 10a through 10d to flow back into the independent passages 12.

However, in the low-speed, light-load range including idling of the engine 18, each secondary throttle valve 52 is operated to close through control by the unit 56, thus closing the passage 30 at a portion near the intake port 24. Therefore, the exhaust gases that are flowing back stop in the independent passages 12 on the downstream side of the secondary throttle valves 52 and are prevented from flowing farther upstream.

Furthermore, the exhaust gases flowing back into the independent passage 12 increase a pressure in the downstream portion of the valve 52, thereby reducing a pressure difference which causes the back flow of the exhaust gases and accordingly promoting the restraint of the back flow of the exhaust gases. This reduces the quantity of exhaust gases in the intake air to be drawn into the cylinders 10a through 10d during the intake stroke after the overlap, thus assuring combustion stability during the light-load operation of the engine 18.

In Fig. 8, PE denotes a mean exhaust pressure in the exhaust passage; PB, a mean intake air pressure in the manifold passage 34 in the surge tank 32; P'B, an intake air pressure in the independent passage 12 on the downstream side of the secondary throttle valve 52; and Pc, a pressure in the cylinders 10a through 10d. The pressures P'B and Pc were measured with the valves 52 closed.

On the other hand, in the high-load range of the engine 18, as the throttle valve 44 opens wider and a discharge air pressure from the supercharger 42 increases, the intake air pressure in the independent passage 12 becomes greater than the exhaust gas pressure. In this operation range, the secondary throttle valve 52 of each independent passage 12 is fully opened by the control unit 56, as shown in Fig. 7.

Therefore, during the overlapped opening period of the intake and exhaust valves 22, 26 of each of the cylinders 10a through 10d, the intake air having the pressure higher than that of the exhaust gases smoothly and effectively forces the residual exhaust gases in the cylinders 10a through 10d out into the exhaust passages, thereby remarkably enhancing the effect of scavenging the residual gases. In consequence, the rise of intake gas temperature in the compression stroke is reduced, thereby improving the anti-knock performance of the engine 18. This makes it possible to raise the compression ratio for increasing the output power of the engine 18 and improving fuel consumption.

Thus, by simply providing the secondary throttle valve 52 in each independent passage 12 as a part of the intake air passage 30 and by controlling the opening and closing operation of this valve 52 in accordance with the loaded condition of the engine 18, combustion stability of the supercharged engine can be maintained in the light-load range and the adoption of a high compression ratio can be realized, without any complicated structure such as a variable valve timing mechanism.

In the aforementioned embodiment, the mechanical supercharger 42 is used as a supercharger; the present invention, however, can also be applied to supercharged engine having a turbosupercharger which supercharges the intake air in the high-load range of engine.

Also in the aforementioned embodiment, the secondary throttle valve 52 is disposed in the independent passage 12 separately from the main throttle valve 44. If desired, a main throttle valve may be provided in each independent passage and may serve also as a secondary throttle valve. In this case, however, there is a possibility that fuel supply from the injector 50 delays in relation to the opening of the throttle valve. To solve this problem, it will be necessary to, for example, inject the fuel directly into the combustion chamber in the cylinder.

As described hereinabove, according to this embodiment, the secondary throttle valve 52 is disposed in the independent passage 12 which communicates with the intake port 24 of each of the cylinders 10a through 10d of the engine with the supercharger 24. This secondary throttle valve 52 is controlled to open in, for example, the high-load range of the engine 18 in which the intake air pressure rises higher than the exhaust pressure, and to close in other load ranges including at least the low-speed, light-load condition. In the high-load range of the engine 18, therefore, the effect of scavenging the residual exhaust gases in the cylinders 10a through 10d can be enhanced by utilizing the extended setting of the intake/exhaust valves overlap period. In the light-load range, etc. of the engine 18 where the intake air pressure decreases largely below the exhaust pressure, the back flow of the residual exhaust gases from the cylinders into the intake air passage can effectively be restrained, despite of the aforesaid extended overlap period, by the secondary throttle valve 52, thus improving and maintaining the combustion stability of the engine 18. The high compression ratio can be achieved while maintaining the combustion stability in the light-load range of the supercharged engine, by the simple constitution and without using a variable valve timing mechanism and the like. Consequently, power output and fuel consumption of the supercharged engine can be improved.

Second Embodiment:

Next the second embodiment of the present invention will be described with reference to Figs. 9 through 14.

In Fig. 9, numeral 20 indicates an engine, and numerals 10a through 10d are cylinders of the engine 20. The geometric compression ratio of this engine 20 has been preset to a high value above 8.5. To this engine 20 are connected an intake manifold 72 of an intake air passage 70 and an exhaust manifold 76 of an exhaust passage 74. A turbo-supercharger 78 is provided which has a turbine 80 disposed in the exhaust passage 74 and a compressor 82 in the intake air passage 70 and connected with the turbine 80, and is driven by the exhaust gases to supercharge the air.

The aforementioned exhaust passage 74 is provided with a bypass passage 84 which bypasses the turbine 80, and a waste gate valve 86 is mounted in the bypass 84 to open and close it in accordance with a supercharge pressure or boost, thereby regulating the flow rate of exhaust gases into the turbine 80 to control the maximum boost. Also provided in the intake air passage 70 are an intercooler 88 for cooling the supercharged intake air and a throttle valve 90 which controls the flow rate of intake air in accordance with operation of an accelerator.

Intake ports 92, 94 and one or two exhaust ports 96 open into the combustion chamber of each of the cylinders 10a through 10d. These ports are designed to be opened and closed by intake valves and an exhaust valves(not illustrated) which are operated by a known valve mechanism. In this embodiment, a primary intake port 92 and secondary intake port 94 are provided which have different closing timings. The intake manifold 72 includes four pairs of independent passages, each pair comprising a first passage 14 connected to the primary port 92 and a second passage 16 to the secondary port 94. The second independent passage 16 is provided with a shutter valve 98 to open and close this passage, which constitutes a variable timing device 100. Numeral 102 is a fuel injector which injects the fuel into the first and second independent passages 14 and 16 at points near the intake ports 92, 94.

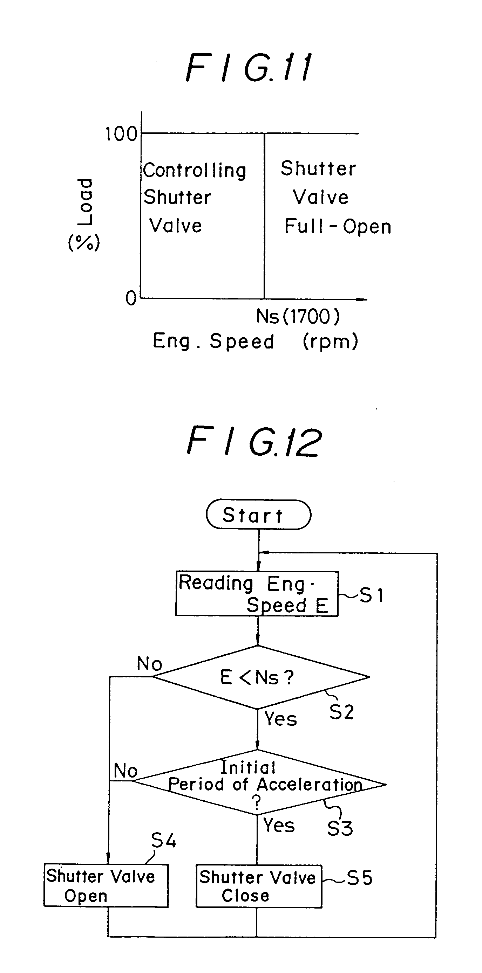

The opening characteristics of the intake ports 92, 94 are set as indicated, in Fig. 10, by a curve C (the opening characteristics of the secondary port 94) and a curve D (the opening characteristics of the primary port 92). That is, the opening timings of the intake ports 92, 94 are set such that, immediately before TDC, the secondary port 94 opens first, being followed by the opening of primary port 92. Also, the closing timing as indicated by ICa of the secondary port 94 is set to a point (first closing timing) later than that of the primary port 92, and the closing timing ICb of the primary port 92 is set to a point (second closing timing) which is substantially same as that of conventional engines. These port opening characteristics are achieved by cam profile, etc. in the valve mechanism.

The overlapped period of the opening of secondary port 94 and exhaust ports 96 is expressed as an overlapping angle Xs in relation to crank angle, the term "opening" being again defined by the valve lift of 1 mm, and the crank angle after BDC is used to define the secondary port closing timing Ys in which the term "closing" means that the secondary port 94 is closed to the valve lift of 1 mm. In Fig. 10, Xs and Ys should be set so that they are within the region G of Fig. 3.

Similarly, the overlapping angle of the primary port 92 and the exhaust ports 96 is illustrated as Xp and the primary port closing timing is Yp. When the shutter valve 98 is closed, Xp becomes an effective overlapping angle while Yp will be an effective intake port closing timing.

The opening and closing operation of the shutter valve 98 in the variable timing device 100 is controlled by an electric control device 104 through an actuator 106. The control device 104 receives signals from a speed sensor 108 which detects the engine speed, a pressure sensor 110 which detects a pressure in the intake air passage at a point downstream of the throttle valve 90, and from a throttle opening sensor 112 which detects the degree of opening of the throttle valve 90. The control by the unit 104 is such that it opens the shutter valve 98 at least during high-speed, high-load operation, and closes the shutter valve 98 during low-speed operation but with a predetermined high load at which volume of the supercharged air is still small.

According to this embodiment, as shown in Fig. 11, the shutter valve 98 is held full-open in the high-load range as well as in the medium- and low-load ranges when the engine is operating at high speed over the specific speed Ns. Also, in a low-speed range of less than the specific speed Ns, the shutter valve 98 is so controlled that it will be closed at high load during the initial period of acceleration.

The outline of this control is shown by a flowchart of Fig. 12. In this drawing, the engine speed E is read at Step S1; at Step S2, whether or not this engine speed E is lower than the specific speed Ns is determined; in the case of E < Ns, whether or not the engine is in the initial period of acceleration is judged at Step S3; and the shutter valve 98 will be opened at Step S4 if determined "YES" and closed at Step S5 in the case of "NO". When it is determined as E ≧ Ns at Step S2, the shutter valve 20 is immediately opened at Step S4.

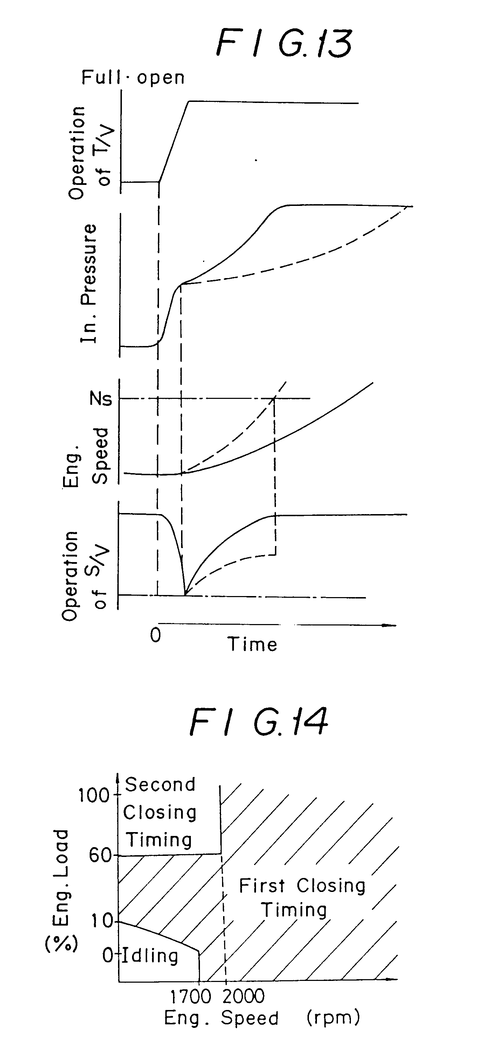

Therefore, when the engine is operating at a slow speed with a low load in which the throttle opening is small, the shutter valve 98 is opened as shown in Fig. 13. However, during the initial period of acceleration in which the throttle opens wider, the shutter valve 98 is closed, and thereafter the shutter valve 98 is gradually opened in accordance with the rise of a pressure in the intake air passage (see the full-line curve in Fig. 13). If the engine speed reaches the specific speed Ns before the boost is sufficiently raised, the shutter valve 98 is fully opened immediately (see the broken-line curve in Fig. 13).

It is to be noted here that the determination as to whether or not the engine is in the initial period of acceleration, at Step S3 in Fig. 12, may be performed by, for example, determining whether or not it has passed two seconds after the start of acceleration.

The operation of the supercharged engine of the above embodiment will be described hereinbelow.

When the shutter valve 98 is opened, the air is supplied into the combustion chamber through both intake ports 92, 94. Accordingly, the first closing timing ICa of the secondary port 94 becomes a practical intake port closing timing. Thus, despite the high geometric compression ratio as compared with the conventional supercharged engines, the effective compression ratio is moderately lowered because the intake port closing timing is retarded. This relation has already been discussed with reference to Fig. 4.

In Fig. 4, the range indicated by oblique broken lines is for conventional supercharged engines, and the range indicated by oblique solid lines is for the present invention in which the effective compression ratio is moderately set by the geometric compression ratio (over 8.5) and the first closing timing ICa.

In the conventional supercharged engines, as shown in this graph, the geometric compression ratio is set to 7.5 to 8.5, and the intake port closing timing is set to around 20 to 40 degrees ABDC. Within this range, therefore, an adequate effective compression ratio is obtained to prevent knocking and to insure combustion stability during high supercharge or boost.

In the meantime, the engine of the present invention has the geometric compression ratio of over 8.5, higher than conventional compression ratios, and also the first closing timing ICa is set to over 50 degrees ABDC, later than the conventional intake port closing timing. Thus, as far as the first closing timing ICa is executed, the effective compression ratio can be held, for example, at about the same level as conventional ones.

Alternatively, since the clearance volume is decreased to reduce the amount of residual gases by increasing the geometric compression ratio, high combustion stability can be insured and accordingly the effective compression ratio can be set lower than conventional ones.

It is desirable that the effective compression ratio be set within the specific range as shown in Fig. 4. When the geometric compression ratio and the first closing timing ICa are to be set, the delay of the first closing timing ICa should be increased with the increase of the geometric compression ratio so that the relation of both will come within the range indicated by oblique lines in Fig. 5.

Since the intake port is closed at the first closing timing ICa during high-speed, high-load operation, the effective compression ratio is lowered to thereby prevent knocking. Also, the expansion ratio increases as the result of the increase of the geometric compression ratio, thus enabling to lower the exhaust gas temperature. Consequently, the reliability of the exhaust system can be maintained without necessity of enriching the air-fuel ratio during high speed operation as in conventional engines. Furthermore, the cycle efficiency can be enhanced with the increase of the expansion ratio.

As mentioned above, the intake port in this embodiment is set to be closed at the first closing timing even in the medium- and low-load ranges. In such ranges, the mixture that has excessively been drawn in will be returned to the intake system while the intake port is open after BDC with the throttle valve 90 so pre-adjusted as to reduce the intake negative pressure below conventional ones. Therefore, a pumping loss, which is caused by the intake negative pressure, can be reduced.

On the other hand, when the engine is operating in the low-speed range but with high load during the initial period of acceleration, the shutter valve 98 of the variable device 100 is closed to shut off the supply of the intake air from the secondary port 94. Therefore, the second closing timing ICb which is the closing timing of the primary port 92 becomes a practical intake port closing timing, thus effectively increasing the engine output power to prevent the lowering of acceleration performance. That is, when the engine is operating at a low speed, the volume of supercharged air is relatively small despite of great load. Particularly when a turbo-supercharger 78 is employed, the volume of supercharged air during the initial period of acceleration is small due to a response lag (so-called turbo lag) in relation to the variation of engine load. In such engine conditions, if the intake port is closed at the first closing timing ICa, there is a possibility that the engine output power will decrease due to a flow back of the mixture and the like. Therefore, during the initial period of acceleration under the low supercharging the intake port closing timing should be advanced, thereby preventing the flow back of intake air while increasing the effective compression ratio. By these factors acceleration performance can be enhanced.

In the embodiment described above, a turbo-supercharger is used for supercharging but a mechanical-supercharger which is driven by the engine output power may also be employed. In case of the mechanical-supercharger, unlike the turbo-supercharger, a high boost can be obtained throughout a wide range of engine speed and therefore the overlap may become larger in the range of high engine speed. The charging efficiency generally tends to become lower as the intake port closing timing is delayed. However, since a sufficient volume of air can be charged by the mechanical supercharger substantially at the same time of acceleration, there is no problem about acceleration performance. In addition, the extended overlap increases the volume of charge through scavenging in low-speed, high-load operation while decreasing the boost. This reduces a driving resistance of the supercharger, resulting in an increase of engine torque and improvement in fuel economy.

The control in the variable timing device 100 may also be executed as shown in Fig. 14 in accordance with the engine speed and engine load. Particularly, when the mechanical supercharger is employed, the control of Fig. 14 is preferable. Thus, the intake port is closed at the first closing timing ICa in the high-speed, high-load range as well as in the medium- and low-load range (except the idling range) as indicated by oblique lines in Fig. 14, whereby the exhaust gas temperature can be lowered even during the high-speed, high-load range and the pumping loss may be reduced during the medium- and low-load range, as in the control of Figs. 11 to 13. On the other hand, in the range of high-load but low-speed in which the volume of supercharged air is small, the intake port is closed at the second closing timing ICb provided that the latter is set to more than 50 degrees ABDC. This increases the effective compression ratio for improving the engine output power. It is also desirable to employ the second closing timing in the idling range for the purpose of enhancing the combustion rate.

Other structures may be employed for the variable timing device. Examples thereof includes a valve stop mechanism which enables stopping the operation of the intake valve of the secondary port 94, and a timing change mechanism which can vary the intake valve operating timing. Furthermore, the overlapped period of intake and exhaust ports may be controlled to gradually grow larger with the increase of load, by the use of a motor which can be mounted on an inlet cam and which enables to adjust the intake valve phase of the secondary port 94.

When the last system to change the phase of the intake valve by the motor is to be adopted, the intake valve of the primary port 92 as well as the intake valve of the secondary port 94 may be controlled simultaneously. That system may also be employed for applying the concept of the invention to an engine having a single intake valve.

The control of overlapped period may be effected by directly comparing an intake pressure and an exhaust pressure sensed by sensors. Furthermore, the overlapped period may be varied by changing the exhaust port closing timing.

In the supercharged engine of the second embodiment, the geometric compression ratio of engine is set higher than that of conventional supercharged engines and, during at least high-speed, high-load operation, the intake port is closed at the first closing timing which is set at a point later than that of the second closing timing, thus moderately decreasing the effective compression ratio while increasing the expansion ratio. Accordingly, the excessive rise of exhaust gas temperature can be prevented without enriching the air-fuel ratio, and also the cycle efficiency can be enhanced, thereby improving fuel economy during high-speed operation.

During a low-speed operation with a predetermined high load, a high effective compression ratio is obtained by closing the intake port at the second closing timing which is earlier than the first closing timing, whereby the engine output power may be improved during low-speed operation in which the volume of supercharged air is relatively small.

As is obvious from the description given above the present invention is capable of ensuring that the geometric compression ratio of the supercharged engine is set to a high compression ratio over 8.5 which, in conventional engines, could not be adopted due to a knock limit especially at high speed and at high load, and at the same time, the overlapping angle is widened to improve the exhaust efficiency, thereby lowering the intake temperature and increasing the charging efficiency, which results in achieving a wide knock limit and improved thermal efficiency. On the other hand, delaying the intake port closing timing increases the expansion ratio, thus also lowering the exhaust gas temperature and improving the thermal efficiency. Furthermore, advantages of the both can simultaneously be realized by finding out the ideal correlation of the overlapping angle with the intake port closing timing. It is therefore possible to lower the exhaust gas temperature without necessity of enriching the air-fuel ratio particularly at high speed and high load. This cooperates with the increase of thermal efficiency to remarkably improve the fuel consumption of the supercharged engine.

## Claims

1. A supercharged engine having a supercharger (42) and an ingnition plug and wherein a geometric compression ratio of the engine is set to more than 8.5,
   **characterized in that**
   an intake port closing timing Y defined by a crank angle after bottom dead center when an intake valve is closed to the position of a valve lift of 1 mm, and an overlapping angle X defined by a crank angle for a period during which said intake and an exhaust valve are both opened by the valve lift of more than 1 mm, are determined such that the expression of

   $$Y \geqq -1,75X + 10$$

   will be satisfied.

2. A supercharged engine as claimed in claim 1, wherein an effective compression ratio defined by a ratio between a cylinder volume when said intake valve is closed to said valve lift 1 mm and a cylinder volume at top dead center is more than 6.5.

3. A supercharged engine as claimed in claim 1 or 2, wherein an exhaust port opening timing Z defined by a crank angle before bottom dead center when said exhaust valve opens to the position of 1 mm valve lift and said intake port closing timing Y are arranged so as to be Y > Z.

4. A supercharged engine as claimed in any one of the claims 1 to 3, including a throttle valve disposed in an independent intake air passage formed at a position downstream of said supercharger and communicating with each cylinder, an actuator for opening and closing said throttle valve, and control means for controlling said actuator to close said throttle valve within a predetermined light-load, low-speed range of the engine.

5. A supercharged engine as claimed in any one of the claims 1 to 4, wherein said overlapping angle X is set below 40 degrees.

6. A supercharged engine as claimed in any one of the claims 1 to 5, including variable timing means for changing said intake port closing timing Y between a first closing timing delayed by a predetermined angle from bottom dead center and a second closing timing earlier than said first closing timing, and control means for controlling said variable timing means so that said intake port is closed at said first closing timing at least within a high-speed, high-load range of the engine.

7. A supercharged engine as claimed in claim 6, wherein said control means includes means for preferentially changing said intake port closing timing to said second closing timing in an initial period of acceleration of a vehicle.

8. A supercharged engine as claimed in claim 6 or 7, wherein said control means includes means for closing said intake port at said second closing timing within a predetermined low-speed, high-load range and within a predetermined low-speed, light-load range.

9. A supercharged engine as claimed in any one of the claims 1 to 8, including variable overlap means for changing said overlapping angle between a first overlap angle over a predetermined value and a second overlap angle smaller than said first overlap angle, said variable overlap means being controlled to render said overlapping angle to said first overlap angle at least within a predetermined high-speed, high-load range.

## Revendications

1. Moteur suralimenté comportant un surcompresseur (42) et une bougie d'allumage, et dans lequel le rapport de compression géométrique du moteur est réglé à plus de 8,5, caractérisé en ce qu'un temps Y de fermeture de l'orifice d'admission, défini par un angle de calage de vilebrequin entre le point mort bas et la fermeture d'une soupape d'admission jusqu'à une position de levée de 1 mm, et un angle de chevauchement X défini par un angle de calage de vilebrequin pendant une période pour laquelle ladite soupape d'admission et une soupape d'échappement sont toutes deux ouvertes avec une levée au-dessus de 1 mm, sont déterminés de façon que la relation $Y \geq -1,75 X + 10$ soit toujours satisfaite.

2. Moteur suralimenté selon la revendication 1, dans lequel un taux de compression effectif défini par un rapport entre un volume de cylindre lorsque ladite soupape d'admission est fermée pour ladite levée de soupape de 1 mm et un volume de cylindre au point mort haut est supérieur à 6,5.

3. Moteur suralimenté selon la revendication 1 ou 2, dans lequel un temps d'ouverture d'orifice d'échappement Z défini par un angle de calage de vilebrequin avant le point mort bas lorsque ladite soupape d'échappement s'ouvre jusqu'à la position de levée de 1 mm et ledit temps de fermeture d'orifice d'admission Y sont agencés de façon que $Y > Z$.

4. Moteur suralimenté selon l'une quelconque des revendications 1 à 3, comprenant un obturateur disposé dans un passage d'air d'admission indépendant formé en une position en aval dudit surcompresseur et communiquant avec chaque cylindre, un dispositif d'actionnement pour ouvrir et fermer ledit obturateur, et des moyens de commande pour commander ledit dispositif d'actionnement pour fermer ledit obturateur dans un domaine de fonctionnement à basse vitesse et faible charge prédéterminé du moteur.

5. Moteur suralimenté selon l'une quelconque des revendications 1 à 4, dans lequel ledit angle de chevauchement X est réglé au-dessous de 40 degrés.

6. Moteur suralimenté selon l'une quelconque des revendications 1 à 5, comprenant des moyens rythmeurs variables pour modifier ledit temps de fermeture d'orifice d'admission Y entre un premier temps de fermeture retardé d'un angle prédéterminé à partir du point mort bas et un second temps de fermeture en avance sur ledit premier temps de fermeture, et des moyens de commande pour commander lesdits moyens rythmeurs variables de façon que ledit orifice d'admission soit fermé audit premier temps de fermeture au moins dans un domaine de fonctionnement à forte charge et haute vitesse du moteur.

7. Moteur suralimenté selon la revendication 6, dans lequel lesdits moyens de commande comprennent des moyens pour faire passer préférentiellement ledit temps de fermeture d'orifice d'admission audit second temps de fermeture au cours d'une période initiale d'accélération d'un véhicule.

8. Moteur suralimenté selon la revendication 6 ou 7, dans lequel lesdits moyens de commande comprennent des moyens pour fermer ledit orifice d'admission audit second temps de fermeture dans un domaine de fonctionnement à haute charge et basse vitesse prédéterminé et dans un domaine de fonctionnement à faible charge et faible vitesse prédéterminé.

9. Moteur suralimenté selon l'une quelconque des revendications 1 à 8, comprenant des moyens de chevauchement variable pour modifier l'angle de chevauchement entre un premier angle de chevauchement sur une valeur prédéterminée et un second angle de chevauchement inférieur audit premier angle de chevauchement, lesdits moyens de chevauchement variable étant commandés pour faire passer ledit angle de chevauchement audit premier angle de chevauchement au moins dans un domaine de fonctionnement à haute vitesse et forte charge prédéterminé.

**Patentansprüche**

1. Aufgeladener Motor mit einem Lader (42) und einer Zündkerze, wobei ein geometrisches Kompressionsverhältnis des Motors auf mehr als 8,5 festgesetzt ist, **dadurch gekennzeichnet,** daß eine Einlaß-Schließzeit (Y), die definiert ist durch einen Kurbelwellenwinkel nach dem unteren Totpunkt bis zu einem Zeitpunkt, zu dem das Einlaßventil bis zu einer Stellung von einem Ventilhub von 1 mm geschlossen ist, und ein Überlappungswinkel X, der definiert ist durch einen Kurbelwellenwinkel während einer Zeitspanne, in der das Einlaß- und ein Auslaßventil mit einem Ventilhub von mehr als 1 mm geöffnet sind, derart bestimmt sind, daß die Beziehung

$$Y \geq -1,75 x + 10$$

erfüllt ist.

2. Aufgeladener Motor nach Anspruch 1, bei dem ein effektives Kompressionsverhältnis, das definiert ist durch ein Verhältnis zwischen einem Zylindervolumen bei auf einen Ventilhub von 1 mm geschlossenem Einlaßventil und einem Zylindervolumen beim oberen Totpunkt, mehr als 6,5 beträgt.

3. Aufgeladener Motor nach Anspruch 1 oder 2, bei dem eine Auslaß-Öffnungszeit Z, die definiert ist durch einen Kurbelwellenwinkel vor dem unteren Totpunkt bis zu einem Zeitpunkt, zu dem das Auslaßventil bis zu einer Stellung von einem Ventilhub von 1 mm öffnet, und die Einlaß-Schließzeit Y derart eingerichtet sind, daß Y > Z.

4. Aufgeladener Motor nach einem der Ansprüche 1 bis 3, mit einem Drosselklappenventil in einem stromabwärts bezüglich des Laders ausgebildeten unabhängigen Lufteinlaßkanal, der mit jedem Zylinder verbunden ist, und mit einem Aktuator zum Öffnen und zum Schließen des Drosselklappenventils, und einer Steuereinrichtung zum Steuern des Aktuators derart, daß er das Drosselklappenventil innerhalb eines vorbestimmten Niedriglast-, Niedrigdrehzahl-Bereichs des Motors schließt.

5. Aufgeladener Motor nach einem der Ansprüche 1 bis 4, bei dem der Überlappungswinkel X auf weniger als 40° eingestellt ist.

6. Aufgeladener Motor nach einem der Ansprüche 1 bis 5, mit einer veränderlichen Zeitfestlegungseinrichtung zum Ändern der Einlaß-Schließzeit Y zwischen einer ersten Schließzeit, die um einen vorbestimmten Winkel gegenüber dem unteren Totpunkt verzögert ist, und einer zweiten Schließzeit, die früher liegt als die erste Schließzeit, und mit einer Steuereinrichtung zum Steuern der veränderlichen Zeitfestlegungseinrichtung derart, daß der Einlaß wenigstens innerhalb eines Hochdrehzahl-, Hochlast-Bereichs des Motors mit der ersten Schließzeit geschlossen wird.

7. Aufgeladener Motor nach Anspruch 6, bei dem die Steuereinrichtung eine Einrichtung aufweist zum bevorzugten Ändern der Einlaß-Schließzeit in die zweite Schließzeit während einer Anfangsphase der Beschleunigung eines Fahrzeugs.

8. Aufgeladener Motor nach Anspruch 6 oder 7, bei dem die Steuereinrichtung eine Einrichtung aufweist zum Schließen des Einlasses mit der zweiten Schließzeit innerhalb eines vorbestimmten Niedrigdrehzahl-, Hochlast-Bereichs und innerhalb eines vorbestimmten Niedrigdrehzahl-, Niedriglast-Bereichs.

9. Aufgeladener Motor nach einem der Ansprüche 1 bis 8, mit einer veränderlichen Überlappungseinrichtung zum Ändern des Überlappungswinkels zwischen einem ersten Überlappungswinkel oberhalb eines vorbestimmten Wertes und einem zweiten Überlappungswinkel, der kleiner ist als der erste Überlappungswinkel, wobei die veränderliche Überlappungseinrichtung derart gesteuert wird, daß der Überlappungswinkel den Wert des ersten Überlappungswinkels zumindest innerhalb eines vorbestimmten Hochdrehzahl-, Hochlast-Bereichs annimmt.

*F I G. 1*

*F I G. 2*

EP 0 269 125 B1

F I G. 3

EP 0 269 125 B1

# F I G. 4

# F I G. 5

# F I G. 6

(a)

(b)

(c)

## FIG. 7

Eng. Load (%)

100

10

0

Valve Open

Valve Close

800    1700    Eng. Speed (rpm)

## FIG. 8

Ex. Valve    In. Valve

Valve Lifting→

$P_E$ (mean exhaust pressure)

$P_C$ (pressure in cylinder)

$P'_B$ (intake pressure at ind. passage)

$P_B$ (mean intake pressure)

$P_B = P'_B$

Overlapped Period

Pressure

Crank Angle ——→

⋇ Pressure in cylinder of conventional engine

18

# F I G . 9

# F I G . 10

# F I G.11

| | Controlling Shutter Valve | Shutter Valve Full-Open |

100 ─ Controlling Shutter Valve / Shutter Valve Full-Open

(%) Load

0

Ns (1700)

Eng . Speed   (rpm)

# F I G.12

Start

Reading Eng·
Speed E ~S1

No ← E < Ns ?  S2
Yes

No ← Initial Period of Acceleration ?  S3
Yes

S4
Shutter Valve Open

Shutter Valve Close ~S5

# F I G.13

Full·open

Operation of T/V

In. Pressure

Ns

Eng. Speed

Operation of S/V

0          Time

# F I G.14

Eng. Load (%)

100

Second Closing Timing

60

First Closing Timing

10

0  Idling

1700  2000

Eng. Speed (rpm)

21